# EUROPÄISCHE PATENTANMELDUNG

(11) **EP 1 302 301 A1**
(43) Veröffentlichungstag der Anmeldung: **16.04.2003**
(21) Anmeldenummer: 02020929.2
(22) Anmeldetag: 19.09.2002
(51) Int. Cl.: B29C 49/38

(54) **Vorrichtung zur Herstellung von gewellten Kunststoff-Rohren**

(30) Priorität: 16.10.2001 DE 10152638
(71) Anmelder: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred, Dr. Dipl.-Ing.

(57) **Zusammenfassung**

Eine Vorrichtung zur Herstellung von gewellten Kunststoff-Rohren, insbesondere Schläuchen, weist auf einem Maschinentisch (1) umlaufend antreibbare, aus Halbkokillen (2, 2') gebildete Form-Kette (3, 3') auf. Die Halbkokillen (2, 2') ergänzen sich in der Formstrecke (9) jeweils zu einer geschlossenen Form. Sie sind über Einlaufrollen (7) und Rücklaufrollen (14) geführt. Die Rücklaufrollen (14) sind in Produktionsrichtung (4) verstellbar.

## Beschreibung

Die Erfindung betrifft eine Vorrichtung zur Herstellung von gewellten Kunststoffrohren nach dem Oberbegriff des Anspruches 1. Derartige Vorrichtungen sind in großer Zahl bekannt, beispielsweise aus der EP 0 065 729 B1 (entsprechend US-Patent 4,492,551). Aus derartigen Vorrichtungen lassen sich Kunststoff-Rohre mit umlaufenden Rillen, sogenannte Wellrohre, herstellen, die auch flexibel sein können, also gewellte Schläuche sind. Derartige Schläuche können an ihren Enden Anschlußstücke in Form von Muffen oder Spitzenden oder einfach nur glattwandige Anschlußstücke aufweisen, die also nicht mit Rillen bzw. einer Wellung versehen sind.

Um derartige teilgewellte Rohre bzw. Schläuche unterschiedlichen Durchmessers oder mit unterschiedlichen Anschlußstücken herstellen zu können, ist es aus der US-PS 4,325,685 bekannt geworden, Halbkokillen mit unterschiedlich ausgeformten Formausnehmungen zu verwenden, die auf Schlittenträgern querverschiebbar angeordnet sind, wobei die Schlittenträger selber wieder zu zwei Ketten miteinander verbunden sind. Diese Ausgestaltung ist außerordentlich aufwendig. Eine Einstellung unterschiedlicher Rohr-Längen ist hierbei nicht möglich.

Aus der DE 199 14 974 A1 ist eine ähnliche Ausgestaltung bekannt, bei der beim Rücklauf der Halbkokillen ein Auswechseln von Halbkokillen möglich ist. Eine Veränderung der Rohrlängen ist hiermit ebenfalls nicht möglich.

Aus der DE 39 30 318 C1 ist ein modularer Aufbau einer Vorrichtung zur Herstellung von gewellten Kunststoffrohren bekannt, wobei entsprechend der Länge eines Moduls unterschiedliche Kettenumlauflängen erreichbar sind.

Aus der EP 0 764 516 B1 (entsprechend US-PS 5,693,347) ist es bekannt, nicht jeweils zu einer Kette miteinander verbundene Halbkokillen auf einer Formstrecke paarweise aneinanderliegend in Produktionsrichtung zu transportieren und die Halbkokillen einzeln mittels einer entsprechenden Transporteinrichtung vom stromabwärtigen Ende zum stromaufwärtigen Ende zurückzutransportieren und wieder in die Formstrecke einzufuhren. In einer Parkposition kann ein Paar von Halbkokillen, beispielsweise zur Ausformung einer Muffe, geparkt sein, das jeweils bei Bedarf in die Formstrecke mit eingeführt wird. Derartige Vorrichtungen sind primär zur Herstellung von Rohren sehr großen Durchmessers geeignet und eignen sich nicht zur Herstellung von Rohren kleineren Durchmessers und entsprechender Schläuche.

Der Erfindung liegt die Aufgabe zugrunde, eine Vorrichtung der gattungsgemäßen Art so auszugestalten, daß mit geringem Umbauaufwand Rohre, und zwar insbesondere flexible Rohre, d. h. Schläuche, die nur teilweise gewellt sind, in unterschiedlicher Länge ohne Abfall bzw. Verschnitt herstellen zu können.

Diese Aufgabe wird erfindungsgemäß durch die Merkmale im Kennzeichnungsteil des Anspruches 1 gelöst.

Die erfindungsgemäßen Maßnahmen erlauben es, lediglich durch Austausch eines oder mehrerer Paare von Halbkokillen die Länge der Form-Ketten so zu verändern, daß die gesamte Umlauflänge jeweils eines Paares von Ketten einem ganzzahligen Vielfachen des zu erzeugenden Rohres entspricht, so daß eine abfall- bzw. verschnittfreie Herstellung möglich ist. Die Rücklaufrollen werden jeweils so eingestellt, daß die Ketten gespannt sind, also störungsfrei umlaufen können.

Besonders bevorzugt ist die stufenlose Verstellung der Rücklaufrollen nach Anspruch 2, was eine stufenlose Anpassung der Umlauflänge der Form-Ketten zuläßt. Insbesondere ist der Einsatz von Halbkokillen möglich, die in Produktionsrichtung unterschiedliche Länge aufweisen. Hierdurch ist eine Feinabstimmung auf unterschiedliche Längen der zu erzeugenden Rohre bzw. Schläuche möglich.

Weitere vorteilhafte Ausgestaltungen ergeben sich aus den weiteren Unteransprüchen.

Weitere Merkmale, Einzelheiten und Vorteile der Erfindung ergeben sich aus der nachfolgenden Beschreibung eines Ausführungsbeispiels anhand der Zeichnung. Es zeigt
- Fig. 1: eine Draufsicht auf eine Vorrichtung zur Herstellung von Kunststoff-Rohren,
- Fig. 2: einen Teil-Querschnitt durch die Vorrichtung nach Fig. 1,
- Fig. 3: eine Draufsicht auf eine Vorrichtung zur Herstellung von Kunststoff-Rohren in schematischer Darstellung, die in Produktions-richtung verschiebbare Rücklaufrollen aufweist,
- Fig. 4: einen vertikalen Querschnitt durch Fig. 3 gemäß der Schnittlinie IV-IV in Fig. 3,
- Fig. 5: ein Rohr mit glattwandigen Anschlußstücken,
- Fig. 6: eine Seiten-Längs-Ansicht einer Form-Kette zur Herstellung eines Rohres nach Fig. 5,
- Fig. 7: eine Seiten-Längs-Ansicht der Form-Kette mit einer gegenüber Fig. 6 reduzierten Anzahl von Halbkokillen,
- Fig. 8: eine Seiten-Längs-Ansicht einer Form-Kette zur Herstellung eines Rohres,
- Fig. 9: eine Seiten-Längs-Ansicht einer Form-Kette mit einer gegenüber Fig. 8 verkürzten Halbkokille und
- Fig. 10: eine Seiten-Längs-Ansicht einer Form-Kette mit zwei gegenüber Fig. 8 verkürzten Halbkokillen.

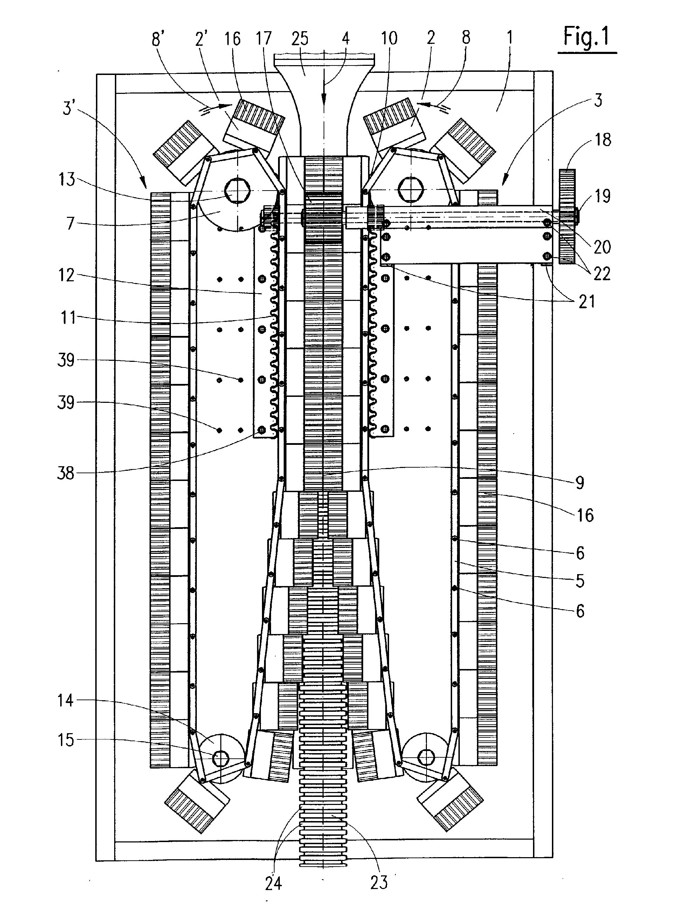

Wie Fig. 1 erkennen läßt, weist eine Vorrichtung zur Herstellung von Kunststoff-Verbund-Rohren mit Querrillen einen Maschinentisch 1 auf, auf dem Halbkokillen 2 bzw. 2' angeordnet sind, die jeweils zu zwei sogenannten Form-Ketten 3 bzw. 3' miteinander verbunden sind. Hierzu sind an jeder Halbkokille 2 bzw. 2' in ihrem außenliegenden, in Produktionsrichtung 4 vorderen Bereich Laschen 5 mittels eines Anlenkbolzens 6 angelenkt, die an der entsprechenden Stelle der nachfolgenden Halbkokille 2 bzw. 2' ebenfalls mittels eines solchen Anlenkbolzens 6 angebracht ist. Die so gebildeten Ketten 3, 3' sind an ihrem in Produktionsrichtung 4 gesehen rückwärtigen Ende über als sogenannte Einlaufrollen 7 dienende Umlenkräder geführt. Die einzelnen Halbkokillen 2, 2' werden beim Umlauf der Ketten 3, 3' entsprechend den Umlaufrichtungspfeilen 8 bzw. 8' in eine Formstrecke 9 eingeschwenkt, in der jeweils zwei Halbkokillen 2, 2' zu einem Kokillenpaar vereinigt werden, wobei wiederum in Produktionsrichtung 4 hintereinanderfolgende Kokillenpaare dicht an dicht liegen. Um ein schnelles Schließen der Halbkokillen 2, 2' zu einer parallelen und aneinanderliegenden Stellung zu erreichen, sind sogenannte Schließrollen 10 vorgesehen, die die in Produktionsrichtung 4 hinteren Enden der Halbkokillen 2, 2' beschleunigt zusammenführen.

In der Formstrecke 9 selber werden die aneinanderliegenden Halbkokillen 2, 2' mittels Führungsrollen 11, die in quer zur Produktionsrichtung 4 und horizontal verstellbaren Führungsleisten 12 drehbar gelagert sind, gegeneinander gedrückt. Die Einlaufrollen 7 sind um Achszapfen 13 drehbar am Maschinentisch 1 angebracht. Am in Produktionsrichtung 4 vorderen Ende des Maschinentisches 1 sind ebenfalls als Umlenkräder dienende Rücklaufrollen 14 um Achszapfen 15 drehbar gelagert, um die die Ketten 3 bzw. 3' umgelenkt und zu den Einlaufrollen 7 zurückgeführt werden. Wie Fig. 1 zu entnehmen ist, enden die Führungsleisten 12 mit Führungsrollen 11 schon um die Länge mehrerer Halbkokillen 2 bzw. 2' vor den Rücklaufrollen 14, so daß die Halbkokillen 2 bzw. 2' wieder parallel zueinander und quer zur Produktionsrichtung 4 voneinander wegbewegt werden können, bevor sie von den Rücklaufrollen 14 verschwenkt werden.

An der Oberseite der Halbkokillen 2, 2' ist eine Verzahnung 16 ausgebildet, wobei die beiden Verzahnungen 16 der einander paarweise zugeordneten Halbkokillen 2, 2' miteinander fluchten, so daß von oben ein gemeinsames Antriebsritzel 17 in diese Verzahnung 16 eingreifen kann, das die Halbkokillen 2, 2' in der Formstrecke 9 als geschlossene Form durch die Formstrecke 9 schiebt. Der Antrieb dieses Antriebsritzels 17 erfolgt in üblicher Weise von einem nicht dargestellten Motor über ein Antriebszahnrad 18, das auf einer Welle 19 drehfest befestigt ist, die wiederum das Antriebsritzel 17 trägt. Die Welle 19 ist in einem Lagerbock 20 gelagert, der über Distanzprismen 21 höhenverstellbar gegenüber dem Maschinentisch abgestützt und mit letzterem mittels Schrauben 22 fest verbunden ist.

Auf der dargestellten Vorrichtung können gewellte Kunststoff-Rohre 23, und zwar sogenannte Well-, Verbund- oder Rippen-Rohre, mit einer Querprofilierung, d. h. mit über deren Umfang umlaufenden Rillen 24 hergestellt werden. Die Rohre 23 können auch flexibel und einwandig, also als Well-Schläuche ausgebildet sein. Zur Herstellung der Rohre 23 ist ein Extruder vorgesehen, von dem nur der Rohrkopf 25 angedeutet ist, wobei es sich bei dem Rohrkopf 25 um den Spritzkopf des Extruders handelt. Aus dem Rohrkopf 25 wird ein nicht sichtbarer Schlauch extrudiert, der in noch warmplastischem Zustand in die in der Formstrecke 9 gebildete Form einläuft, in der die Querprofilierung ausgebildet wird. Die bisher beschriebene Vorrichtung ist bekannt, und zwar beispielsweise aus der DE 196 40 928 AI (entspr. US-Patent 6,045,347). Mit dieser Vorrichtung können in gleicher Weise sogenannte Verbundrohre hergestellt werden, die äußerlich dem Rohr 23 gleichen und innen noch mit einem durchgehend glatten Rohr einstückig ausgebildet sind.

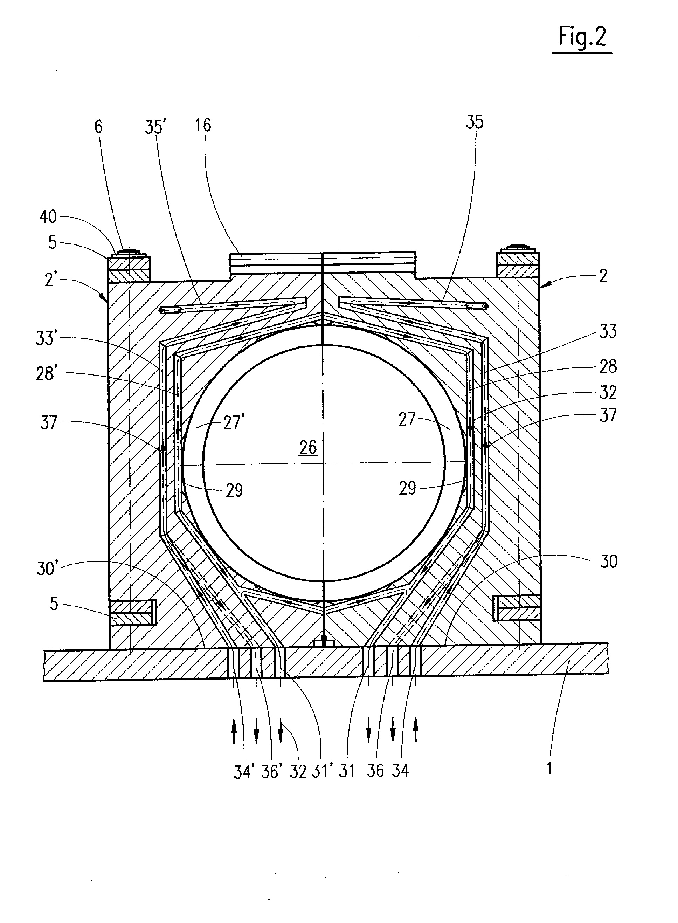

In der Formstrecke 9 werden die paarweise einander zugeordneten Halbkokillen 2, 2' gekühlt; außerdem erfolgt die Ausformung der Rillen 24 durch Vakuumbeaufschlagung des in der Formstrecke 9 gebildeten Formraums 26. Die in den Halbkokillen 2, 2' zur Bildung eines Formraumes 26 ausgeformten Formausnehmungen 27, 27' haben eine zu der Außenform des Rohres 23 komplementäre Form. Die Halbkokillen 2, 2' sind mit Vakuumkanälen 28, 28' versehen, die in der Nähe der Wand der Formausnehmung 27 bzw. 27' verlaufen und diese bei paarweise aneinanderliegenden Halbkokillen 2, 2' in verhältnismäßig geringem Abstand umschließen. Von den Vakuumkanälen 28, 28' münden zahlreiche Vakuumschlitze 29 in die Formausnehmung 27 bzw. 27'. Die Vakuumkanäle 28, 28' sind bei aneinanderliegenden Halbkokillen 2, 2' miteinander verbunden, wie aus Fig. 2 hervorgeht. Die Vakuumkanäle 28 bzw. 28' münden in die auf dem Maschinentisch 1 aufliegende Unterseite 30 bzw. 30' der Halbkokillen 2, 2'. Bei paarweise aneinanderliegenden Halbkokillen 2, 2' befinden sie sich in Überdeckung mit im Maschinentisch 1 angebrachten Vakuumanschlüssen 31, 31', die wiederum an eine nicht dargestellte Vakuumpumpe angeschlossen sind. Die Luftströmung in den Vakuumkanälen 28, 28' und an den Vakuumanschlüssen 31, 31' ist durch Richtungspfeile 32 gekennzeichnet.

Weiterhin sind in den Halbkokillen 2, 2' Kühlkanäle 33, 33' vorgesehen, wobei die Kühlkanäle 33, 33' in den paarweise einander zugeordneten Halbkokillen 2, 2' keine Verbindung untereinander haben. Sie beginnen ebenfalls an der jeweiligen Unterseite 30, 30' der entsprechenden Halbkokille 2, 2', wo sie bei aneinanderliegenden Halbkokillen 2, 2' mit im Maschinentisch 1 ausgebildeten Kühlwasserzuflüssen 34, 34' in Überdeckung kommen. Von dort führen die Kühlkanäle 33, 33' im Abstand um die jeweilige Formausnehmung 27, 27' herum. Unterhalb der Verzahnung 16 sind außerdem wiederum nach außen geführte Zusatzkühlkanäle 35 bzw. 35' ausgebildet. Die Kühlkanäle 33, 33' sind - in Produktionsrichtung 4 gesehen - jeweils in verhältnismäßig geringem Abstand voneinander angeordnet. Jeweils zwei in Produktionsrichtung 4 einander benachbarte Kühlkanäle 33 bzw. 33' sind miteinander verbunden. Wenn jeweils ein Kühlkanal 33 bzw. 33' an den Kühlwasserzufluß 34 bzw. 34' angeschlossen ist, kann auf diese Weise der in Produktionsrichtung 4 nachfolgende Kühlkanal 33, 33' an einen in dem Maschinentisch 1 ausgebildeten Kühlwasserrückfluß 36, 36' angeschlossen sein, wie insbesondere aus Fig. 2 linke Hälfte hervorgeht. Die Kühlwasserströmungsrichtung ist durch die Richtungspfeile 37 angedeutet. Die Vakuumführung und die Kühlwasserführung sind beispielsweise aus der DE 31 20 480 A1 (entspr. US-Patent 4,492,551) bekannt.

Die Führungsleisten 12 sind quer zur Produktionseinrichtung 4 horizontal verstellbar, so daß die Formstrecke 9 auf unterschiedlich breite Halbkokillen 2, 2' eingestellt werden kann. Die Führungsleisten 12 können mittels Schrauben 38 am Maschinentisch 1 befestigt werden, wozu im Maschinentisch 1 quer zur Produktionsrichtung 4 mehrere Reihen von Gewindebohrungen 39 ausgebildet sind. Jede Reihe von Gewindebohrungen 39 entspricht einer bestimmten Breite von einer Halbkokille 2, 2'.

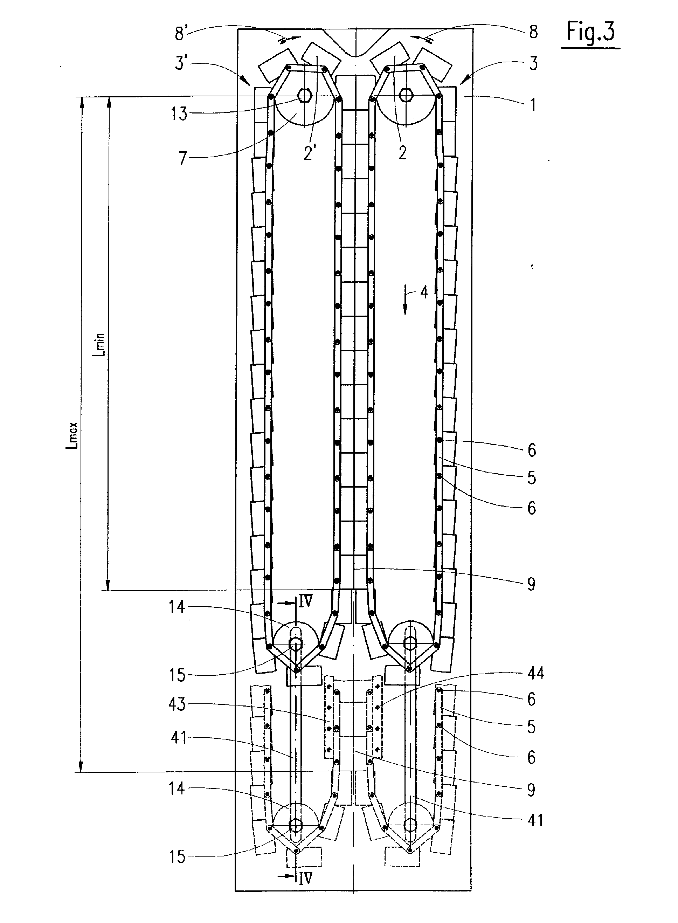

Die in Fig. 3 dargestellte erfindungsgemäße Maschine unterscheidet sich von der in den Fig. 1 und 2 dargestellten bekannten Maschine durch den - bezogen auf die Produktionsrichtung 4 - stromabwärtigen, in Fig. 3 unten dargestellten Bereich. Obwohl aufgrund der schematisierten Darstellung in Fig. 3 die einzelnen Teile nicht identisch wie in Fig. 1 aussehen, werden trotzdem dieselben Bezugsziffern verwendet wie in Fig. 1, ohne daß es einer erneuten Beschreibung bedarf.

Wie aus Fig. 2 hervorgeht, können die Halbkokillen 2, 2' leicht durch Lösen der auf den Anlenkbolzen 6 sitzenden Sicherungsringe 40 ausgetauscht werden.

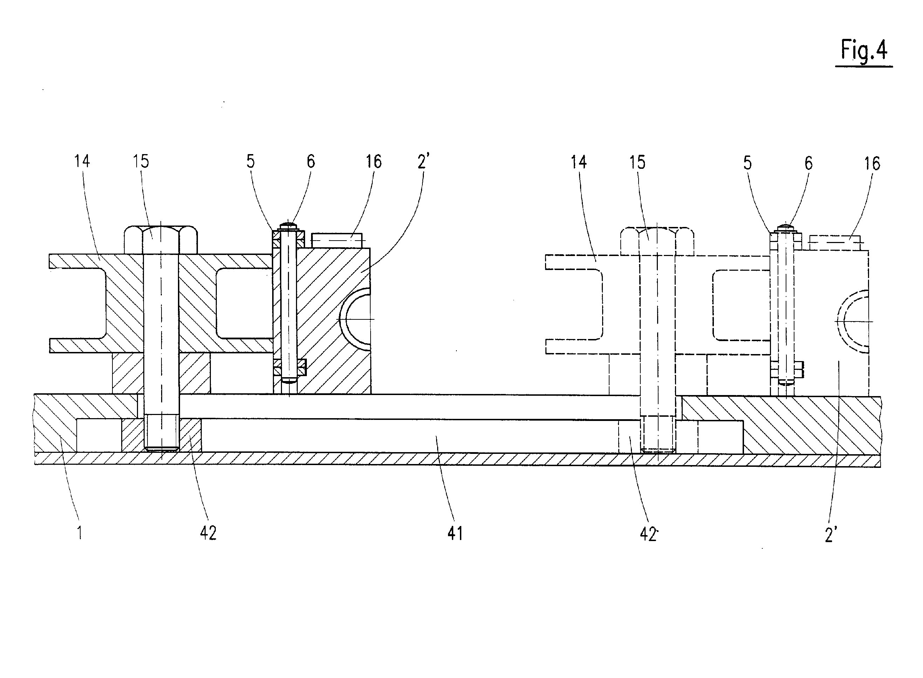

Wie aus Fig. 3 unten hervorgeht, sind die Rücklaufrollen 14 in Produktionsrichtung verstellbar im Maschinentisch gelagert. Der Maschinentisch 1 ist gegenüber der Ausgestaltung nach Fig. 1 in Produktionsrichtung verlängert. Die Achszapfen 15 der Rücklaufrollen 14 sind in in Produktionsrichtung verlaufenden Schlitzen 41 des Maschinentischs 1 angeordnet und können in diesen in Produktionsrichtung verschoben werden. Wie aus Fig. 4 hervorgeht, sind die Achszapfen 15 mittels Befestigungsmitteln 42 mit dem Maschinentisch 1 lösbar verbunden. Sie können von oben gelöst und nach Verschieben des Achszapfens 15 mitsamt der Rücklaufrolle 14 wieder fest mit dem Maschinentisch 1 verbunden werden. Die Länge der Formstrecke 9 kann damit zwischen einer Minimallänge L_{*min*} und einer Maximallänge Lₘₐₓ verändert werden. Eine Ausgestaltung mit kürzest möglicher Formstrecke 9 ist in Fig. 3 ausgezogen dargestellt, während die Ausgestaltung mit längstmöglicher Formstrecke 9 gestrichelt angedeutet ist. Die geschilderten und in Fig. 2 dargestellten Maßnahmen zur Vakuumbeaufschlagung und Kühlung der Halbkokillen 2, 2' erstrecken sich nur über die kürzest mögliche Länge Lₘᵢₙ der Formstrecke 9. In dem darüber hinausgehenden Bereich bis Lₘₐₓ sind entsprechende Einrichtungen im Maschinentisch 1 nicht vorgesehen. Stromabwärts der in Fig. 3 nicht dargestellten Führungsleisten 12 sind im Bereich zwischen Lₘᵢₙ und Lₘₐₓ in Fig. 3 nur angedeutete Leisten 43 vorgesehen, die mittels Schrauben 44 auf dem Maschinentisch 1 befestigt sind und die der tatsächlichen Länge der Formstrecke angepaßt sind. Sie dienen nur dazu zu verhindern, daß die Halbkokillen 2, 2' vor dem geordneten Auseinanderführen unkontrolliert, weil völlig ungeführt, bewegt werden. Durch die geschilderte Längenverstellbarkeit kann die Länge der Form-Ketten 3, 3' verändert werden, so daß die Herstellung von Rohren unterschiedlicher, aber vorgegebener Länge durch geringfügige Umbaumaßnahmen an der Vorrichtung ermöglicht wird, ohne daß Abfall produziert werden muß.

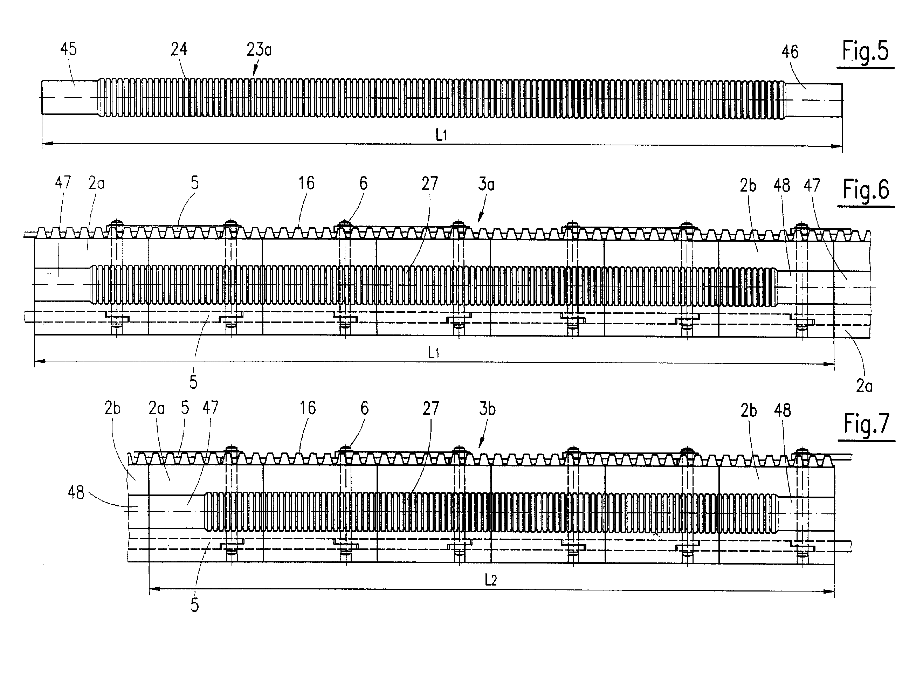

In Fig. 5 ist ein flexibles gewelltes Rohr 23a, also ein gewellter Schlauch dargestellt, der im Bereich seiner beiden Enden jeweils ein glattwandiges Anschlußstück 45, 46 aufweist. Wie Fig. 6 entnehmbar ist, weisen hierzu jeweils Halbkokillen 2a, 2b glattwandige Formausnehmungs-Abschnitte 47, 48 auf. Je nach Länge des zu erzeugenden Rohres 23a sind in jeder Kette so viele Paare von Halbkokillen 2, 2a, 2b angeordnet, daß bei einem vollständigen Umlauf einer Kette 3 hintereinander eine ganzzahlige Anzahl von solchen Rohren 23a mit einer Länge L₁ hergestellt wird.

Das bei der Ausgestaltung nach Fig. 7 herstellbare Rohr 23a weist eine Länge L₂ auf, die sich von L₁ um die Länge 1 einer Halbkokille 2 unterscheidet. Es gilt also L₁ - L₂ = 1. Selbstverständlich kann die Differenz ein mehrfaches Ganzzahliges von 1 betragen. Zur entsprechenden Längenänderung werden jeweils aus jeder Kette ein oder mehrere Halbkokillen 2 entnommen oder eingefügt.

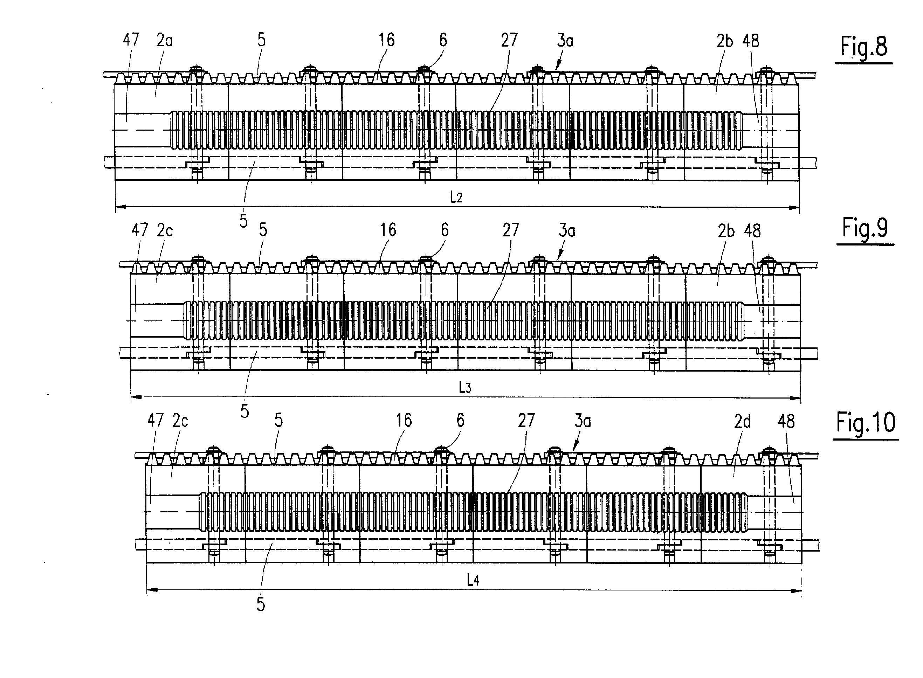

Feiner abgestufte Längenveränderungsmöglichkeiten ergeben sich aus den Fig. 8 bis 10. Hier wird die in Fig. 8 dargestellte Halbkokille 2a, in der unter anderem das Anschlußstück 45 ausgeformt wird, durch eine kürzere Halbkokille 2c (Fig. 9) ersetzt, wodurch eine Feinabstufung in der Länge des herzustellenden Rohres 23a erreichbar ist. Bei der Ausgestaltung nach Fig. 10 werden beide Halbkokillen 2a, 2b durch verkürzte Halbkokillen 2c, 2d ersetzt. Durch die geschilderten Maßnahmen können unterschiedliche Längen L₂ (Fig. 8), L₃ (Fig. 9) und L₄ (Fig. 10) der Rohre erreicht werden.

## Patentansprüche

1. Vorrichtung zur Herstellung von gewellten Kunststoffrohren (23, 23a),
- mit einem Maschinentisch (1),
- mit einer sich in einer Produktionsrichtung (4) auf dem Maschinentisch (1) erstreckenden Formstrecke (9),
- mit zwei - bezogen auf die Produktionsrichtung (4) - der Formstrecke (9) vorgeordneten Einlauf-Umlenk-Einrichtungen (7),
- mit zwei - bezogen auf die Produktionsrichtung (4) - der Formstrecke (9) nachgeordneten Rücklauf-Umlenk-Einrichtungen (14),
- mit Halbkokillen (2, 2'; 2a, 2b; 2c, 2d), die
-- endlos zu zwei Form-Ketten (3, 3'; 3a) lösbar miteinander verbunden sind,
-- sich paarweise auf der Formstrecke (9) zu einer Form ergänzen und
-- jeweils über eine Einlauf-Umlenk-Einrichtung (7) und eine Rücklauf-Umlenk-Einrichtung (14) geführt sind,
und
- mit einem Antrieb zum Vortrieb der Halbkokillen (2, 2'; 2a, 2b; 2c, 2d) durch die Formstrecke (9),
**dadurch gekennzeichnet,**
**daß** die Rücklauf-Umlenk-Einrichtungen (14) in Produktionsrichtung (4) verstellbar am Maschinentisch (1) angebracht sind.

2. Vorrichtung nach Anspruch 1, **dadurch gekennzeichnet,**
**daß** die Rücklauf-Umlenk-Einrichtungen (14) stufenlos verstellbar am Maschinentisch (1) angebracht sind.

3. Vorrichtung nach Anspruch 1 oder 2, **dadurch gekennzeichnet, daß** die Rücklauf-Umlenk-Einrichtungen (14) in in Produktionsrichtung (4) verlaufenden Schlitzen (39) im Maschinentisch (1) verschiebbar angeordnet sind.

4. Vorrichtung nach einem der Ansprüche 1 bis 3, **dadurch gekennzeichnet,**
**daß** die Formstrecke (9) eine konstante Länge aufweist.

5. Vorrichtung nach einem der Ansprüche 1 bis 4, **dadurch gekennzeichnet,**
**daß** die Rücklauf-Umlenk-Einrichtungen als Rücklaufrollen (14) ausgebildet sind.

6. Vorrichtung nach einem der Ansprüche 1 bis 5, **dadurch gekennzeichnet,**
**daß** Halbkokillen (2a, 2b; 2c, 2d) unterschiedlicher Länge auswechselbar einsetzbar sind.
